# EUROPÄISCHE PATENTSCHRIFT

(11) **EP 1 607 776 B1**
(45) Veröffentlichungstag und Bekanntmachung des Hinweises auf die Patenterteilung: **03.06.2009**
(21) Anmeldenummer: 05009109.9
(22) Anmeldetag: 26.04.2005
(51) Int. Cl.: G02B 6/04, B25B 27/00, G02B 6/25

(54) **Verfahren zum Herstellen des Abschlusses eines Lichtleitfaserbündels und hierzu geeignetes Presswerkzeug und Lichtleitfaserbündels**
Method for making a termination of an optical fibre bundle, corresponding press tool and optical fibre bundle
Méthode de fabrication pour une terminaison d'un faisceau de fibres optiques, outil de sertissage adapté et faisceau de fibres optiques

(30) Priorität: 12.06.2004 DE 102004028310
(43) Veröffentlichungstag der Anmeldung: 21.12.2005
(73) Patentinhaber: Schott AG, 55122 Mainz (DE)
(72) Erfinder: Russert, Hubertus, 65321 Heidenrod (DE); Henrich, Thomas, 61449 Steinbach (DE)
(74) Vertreter: Fuchs

(56) Entgegenhaltungen:
- GB-A- 2 191 873
- US-A- 4 217 084
- US-A- 4 567 650
- US-A- 5 787 572

## Beschreibung

Die Erfindung bezieht sich auf ein Verfahren zum Herstellen des Abschlusses eines Lichtleitfaserbündels, bei dem an dem Endabschnitt des Lichtleitfaserbündels eine Hülse aufgeschoben wird und die Hülse in einem Umformwerkzeug mindestens unter Einwirkung von Druck auf dem Endabschnitt verpresst wird, wobei der Endabschnitt des Lichtleitfaserbündels aus Glasfasern zusammen mit der aufgeschobenen Hülse ohne Druckeinwirkung auf die Hülse in ein Preßwerkzeug mit mehr als zwei Backen eingeführt und positioniert wird und nach der Positionierung mittels der Backen ein Druck in ausschließlich radialer Richtung auf die Hülse ausgeübt wird. Die Erfindung betrifft auch eine Vorrichtung zur Herstellung eines Abschlusses gemäß dem Oberbegriff des Anspruchs 9 sowie ein Lichtleitfaserbündel an sich gemäß dem Oberbegriff des Anspruchs 6.

Zur Lichtübertragung werden häufig flexible Lichtleiter bestehend aus einer Vielzahl von Lichtleiteinzelfasern, sogenannte Lichtleitfaserbündel verwendet. Die Einzelfasern sind üblicherweise an einem gemeinsamen Ende in einer Hülse zusammengefasst, welche beispielsweise in einer zur Beleuchtung dienenden Lichtquelle fixiert ist.

Es ist bekannt, die Einzelfasern durch Verkleben miteinander und mit einer aufgeschobenen Hülse zu verbinden oder aber alternativ die Einzelfasern in der gemeinsamen Hülse miteinander zu verschmelzen.

Die JP 3144601 A1 beschreibt ein Verfahren, mit dem ein Lichtleitfaserbündelende geschaffen werden kann. Hierzu wird das Lichtleitfaserbündelende erwärmt und in eine sich verjüngende Öffnung geschoben. Hierdurch wird der Durchmesser des gesamten Bündels reduziert und das Bündel insgesamt komprimiert.

Den gleichen Ansatz verfolgt die DE 2 630 730 A1. Bei dieser ist zusätzlich am abschlussseitigen Ende des Faserbündels eine metallische Hülse aufgebracht. Das Faserbündel wird zusammen mit der Hülse in ein sich verjüngendes Loch geschoben, das in einem Pressteil angeordnet ist. Durch axiales Verschieben des mit der Hülse ausgestatteten Endes des Lichtleiterfaserbündels unter gleichzeitiger Einwirkung von Temperatur wird über die Hülse das Ende des Lichtleitfaserbündels umgeformt.

Die DE 19 855 958 A1 sieht ebenfalls vor, den abschlussseitigen Bereich eines Lichtleitfaserbündels mit einer metallischen Hülse auszustatten und letztere anschließend in einer Spannvorrichtung zu haltern. Ein Umformwerkzeug mit sich verjüngendem Innendurchmesser bewegt sich in axialer Richtung auf die Hülse zu und überführt das Faserende unter Wärmezufuhr in eine hexagonale Packung. Zwischen der Innenwand des Umformwerkzeuges und der Hülse liegt ein Spalt vor, wobei der Wärmeeintrag in das Faserende über einen ringförmigen Abschnitt am kopfseitigen Ende des Faserbündels erfolgt. Der Umformprozess wird hierbei so geführt, dass es zu keiner Anglasung zwischen dem Lichtleitfaserbündel und der metallischen Hülse kommt.

Nachteilig bei diesem Verfahren ist, dass beim Einführen der Hülse ein axialer Druck auf die Lichtleitfasern ausgeübt werden muss, was zur Beschädigung zumindest der außen liegenden Lichtleitfasern führen kann. Außerdem muss die Hülse entsprechend stabil ausgebildet sein, so dass einerseits Materialien wie Stahl gewählt werden müssen und andererseits große Wandstärken erforderlich sind.

In den Schriften DE 32 47 500 A1 und DE 37 44 367C1 wird ein in einer Hülse befindliches Glasfaserbündel mittels eines Ringkolbens mit flüssigem Glas umspritzt. Diese Methoden sind apparativ aufwendig.

Gemäß GB 1 595 163 wird eine Endhülse aus thermoplastischem Kunststoff durch Ultraschallverschweißung mittels einer zweiteiligen Sonotrode mit dem Schutzmantel des Glasfaserbündels, der aus thermoplastischem Material besteht, und dem Faserbündel verbunden.

US 3 914 015 beschreibt Faserverbinder. Die in diesen Faserverbindem eingesetzten Endhülsen bestehen aus schrumpfbarem Metall, das bei einer Temperatur von etwa 75°C auf die Faserenden aufgeschrumpft wird.

US 5 222 180 beschreibt ein Verfahren zur Herstellung eines Endstücks bei einem Faserbündel aus Polymerfasern. Die Fasern werden kalt verstreckt, in eine Hülse geschoben und dann erwärmt. Bei der Erwärmung versuchen sie, ihre ursprüngliche Gestalt wiederzugewinnen und füllen den Hülsenquerschnitt aus.

In der US 4,217,084 ist eine Vorrichtung zum Crimpen optischer Faserbündel bekannt, welche einen Halter für das Glasfaserbündel, eine Crimpvorrichtung, drei Rollkörper aufweist, die mittels Gewindeverstellung eines Überwurfs in radialer Richtung auf eine Hülse zubewegt werden und diese um das Faserbündel herum crimpen.

Die US 4,567,650 offenbart eine Vorrichtung zum Verbinden von Enden zweier Lichtleitfasern mit einer Halteeinrichtung für eine der Fasern und einer Crimpeinrichtung, in der ebenfalls drei Backen radial beweglich angeordnet sind und durch Verstellen einer Spannschraube in radialer Richtung zum Crimpen einer Hülse um die Lichtleitfaser zusammengefahren werden.

Die GB 2191873 A behandelt ein Bündel aus Lichtleiterfasern, welches an seinem Ende mittels eines aufgeschrumpften Glasrohres zusammengefasst ist, wobei durch das Aufschrumpfen die Lücken zwischen den einzelnen Lichtleitfasern und/oder zwischen den Lichtleitfasern und dem Glasrohr teilweise durch das Material des Glasrohres und/oder durch das Material der Ummantelung der Lichtleitfasern gefüllt sind.

Aus der US 5787572 ist eine Vorrichtung zur Herstellung eines Abschlusses eines Lichtleitfaserbündels bekannt, die in einem Heizofen angeordnet ist, so dass die Lichtleitfasern des Bündels mittels des Ofens erforderlichenfalls zur besseren Verformung erwärmt werden können. Die Lichtleitfasern werden in der Vorrichtung unter Einwirkung von Druck in radialer Richtung des Bündels geringfügig verdichtet.

Der Erfindung liegt die Aufgabe zugrunde, ein verbessertes Verfahren und eine verbesserte Vorrichtung bereitzustellen, das/die auf einfache Weise eine schnelle Herstellung eines Abschlusses eines Lichtleitfaserbündels aus Glasfasern erlaubt. Zudem ist es auch Aufgabe der Erfindung ein verbessertes Lichtleitfaserbündel aus Glasfasern zur Verfügung zu stellen.

Bei dem erfindungsgemäßen Verfahren wird der Endabschnitt des Lichtleitfaserbündels aus Glasfasern zusammen mit der aufgeschobenen Hülse ohne Druckeinwirkung auf die Hülse in ein Preßwerkzeug mit mehr als zwei Backen eingeführt und positioniert und nach der Positionierung mittels der Backen ein Druck in ausschließlich radialer Richtung auf die Hülse ausgeübt. Erfindungsgemäß werden die Backen jeweils mittels einer Heizpatrone als integralem Bestandteil beim Verpressen der Hülse beheizt, so dass die Glasfasern beim Verpressen deformiert werden.

Der Pressdruck wird gleichzeitig auf die gesamte zu verpressende Außenfläche der Hülse aufgebracht. Im Gegensatz zu einem axialen Aufschieben des Presswerkzeuges und einem in axialer Richtung fortschreitenden Pressvorgang, wie dies beim Stand der Technik der Fall ist, wird ein erheblicher Zeitgewinn erzielt. Die Presszeit konnte vom Minutenbereich auf den Sekundenbereich reduziert werden.

Ein weiterer Vorteil besteht darin, dass insbesondere die außen liegenden Fasern des Lichtleitfaserbündels keinerlei axialer Belastung ausgesetzt sind, so dass Beschädigungen der Lichtleitfasern vermieden werden. Da ein Abknicken der Hülse während der Verarbeitung aufgrund axialer Kräfte nicht mehr befürchtet werden muss, braucht auch das Hülsenmaterial nicht mehr die im Stand der Technik erforderliche Stabilität aufzuweisen. Es können daher Hülsen aus duktilen Materialien mit geringen Wandstärken eingesetzt werden.

Im Gegensatz zu den üblicherweise als Drehteile vorliegenden Hülsen können durch das erfindungsgemäße Verfahren nunmehr auch tiefgezogene Hülsen aus preiswerteren Materialien, wie z.B. Messing eingesetzt werden.

Tiefgezogene Hülsen lassen sich mit deutlich geringeren Außendurchmessern herstellen als dies bei Drehteilen der Fall ist, so dass auch Lichtleitfaserbündel mit Außendurchmessern im Bereich bis wenige mm mit einer Hülse versehen werden können.

Da wegen fehlender axialer Belastung dünnwandige Hülsen eingesetzt werden können und somit insgesamt geringere Abmessungen für das Lichtleitfaserbündel realisiert werden können, erschließen sich neue Anwendungsbereiche. Der Abschluß des Lichtleitfaserbündels lässt sich in vorhandene Steckerverbindungen mit genormten Abmessungen integrieren. So können die Abschlüsse der Lichtleitfaserbündel für im Automobilbereich eingesetzte Stecker nach dem MOST-Standard

verwendet werden. Auch einfachere Hülsengeometrien sind einsetzbar und so beispielsweise auch Hülsen ohne Ringbund, da eine Fixierung der Hülse in axialer Richtung nicht mehr erforderlich ist.

Vorzugsweise werden beim Aufschieben der Hülse die Lichtleitfasern des Endabschnitts nicht gegeneinander verpresst. Die Fasern werden zwar fixiert, befinden sich aber nicht Presssitz. Eine axiale Belastung der Lichtleitfasern beim Aufschieben der Hülse wird vermieden.

Bei der Herstellung eines Abschlusses eines Lichtleitfaserbündels, bei dem die Lichtleitfasern aus Glas bestehen und eine metallische Hülse verwendet wird, wird die Hülse vorzugsweise auf 500°C - 700°C insbesondere auf 550°C - 650°C erwärmt.

Da der Wärmeeintrag auch gleichzeitig durch die gesamte zu verformenden Außenfläche der Hülse erfolgt, wird die Presszeit ebenfalls deutlich verkürzt.

Das Lichtleitfaserbündel ist derart ausgestaltet, dass die außen liegenden Lichtleitfasern des Lichtleitfaserbündels mindestens teilweise in das Material der Hülse eingebettet sind.

Erfindungsgemäß weisen die deformierten Lichtleitfasern jeweils eine hexagonale Form auf, so dass sie ein zwickelfreies Endes des Faserbündels bilden.

Vorzugsweise besteht die Hülse aus einem duktilen Material. Dadurch, dass das Material der Hülse beim Verarbeitungsvorgang verformbar ist, können sich die außen liegenden Lichtleitfasern in das Material der Hülse eindrücken, wodurch eine Verzahnung der Lichtleitfasern mit dem Hülsenmaterial stattfindet. Es wird dadurch eine deutlich stabilere Verbindung zwischen Hülse und Lichtleitfasern erzielt, was sich in deutlich größeren Abzugskräften bemerkbar macht.

Um diese Einbettung zu ermöglichen, ist es erforderlich, dass das Material der Hülse beim Verarbeiten weicher oder plastischer ist als das der Lichtleitfasern. Die Hülse besteht vorzugsweise aus Metall, insbesondere aus Messing, oder aus Glas.

Die Hülse weist vorzugsweise eine Wandstärke von 0,3 - 0,4 mm auf. Diese Wandstärke gilt insbesondere für kleinere Außendurchmesser, die bei ≥0,5 mm liegen. Die bevorzugten Außendurchmesser der Hülsen können 0,5 - 25 mm betragen. Es wird dadurch eine große Bandbreite von Lichtleitfaserbündeldurchmessem abgedeckt.

In der einfachsten Ausführung kann die Hülse zylindrisch sein und lediglich aus einem Rohrabschnitt bestehen.

Vorzugsweise ist lediglich ein Abschnitt der Hülse verpresst.

Es ist vorn Vorteil, wenn die Hülse auch vor dem Verpressen einen durchmessergrößeren und einen durchmesserkleineren Hüllenabschnitt aufweist, weil der durchmessergrößere Abschnitt als Einführhilfe beim Einschieben des Bündelendes dienen kann.

Die Vorrichtung zum Herstellen eines Abschlusses eines Lichtleitfaserbündels mittels einer Hülse ist derart ausgestaltet, dass das Umformwerkzeug mehr als zwei, die Hülse weitgehend umschließende, in radialer Richtung bewegbare Pressbacken aufweist, um eine möglichst allseitige Umschließung der Hülse zu gewährleisten. Vorzugsweise werden sechs Pressbacken eingesetzt.

Erfindungsgemäß weist die Vorrichtung ferner eine Heizeinrichtung zum Beheizen der Pressbacken aufweist, wobei die Heizeinrichtung Heizpatronen umfasst und wobei jede der Pressbacken des Umformwerkzeugs mit einer Heizpatrone bestückt ist.

Der Begriff radiale Richtung meint eine Richtung senkrecht zur Längsachse der Hülse.

Vorzugsweise ist ein Gegenring vorgesehen, in den die Pressbacken eingreifen, wobei vorzugsweise die Außenflächen der Pressbacken an der Innenfäche des Gegenrings anliegen, und der Gegenring und die Pressbacken relativ zueinander in axialer Richtung bewegbar sind.

Axiale Richtung meint die Richtung der Längsachse der Hülse, was gleichbedeutend mit der Längsachse des Umformwerkzeuges ist. Bei dem relativen axialen Verschieben von Gegenring und Pressbacken werden die Pressbacken radial nach innen bewegt.

Der Gegenring kann eine konische Innenfläche aufweisen, die über die Stirnkante der Pressbacken oder über die Außenfläche der Pressbacken gleitet.

Vorzugsweise weist jeder Pressbacken eine sich zum freien Ende hin verjüngenden Abschnitt auf.

Die gesamte Außenkontur aller Pressbacken kann kegelstumpfartig oder pyramidenstumpfartig sein. Es wird dadurch auf der Außenfläche der Pressbacken eine Gleitfläche gebildet, über die die Innenfläche des Gegenringes gleiten kann.

Um das Gleiten zu erleichtern bzw. den Verschleiß der Bauteile zu mindern, kann die Innenfläche des Gegenringes und/oder die Außenflächen der Pressbacken mit einer hochwarmfesten Gleitbeschichtung, insbesondere aus Titan oder Aluminiumnitrid, versehen sein.

Vorzugsweise sind die Pressbacken in radialer Richtung federnd gelagert. Hierbei ist es von Vorteil, wenn die Pressbacken gegen eine radial nach außen gerichtete Federkraft radial nach innen bewegbar sind. Nach dem Pressvorgang bewegen sich durch die Federkraft die Pressbacken in ihre geöffnete Ausgangsstellung zurück.

Vorzugsweise weist das Umformwerkzeug einen rohrförmigen Körper auf, der einen mit Längsschlitzen versehenen Endabschnitt besitzt. Die durch die Längsschlitze getrennten Rohrsegmente sind als Pressbacken ausgebildet. Die Rohrsegmente sind auf diese Weise federnd an dem rohrförmigen Körper angeordnet.

Das Umformwerkzeug weist mindestens eine Heizeinrichtung auf. Die Heizeinrichtung kann eine induktive Heizung, Heizbänder und/oder Heizpatronen umfassen. Wegen der hohen Temperaturen, die beim Verpressen von metallischen Hülsen erforderlich sind, ist es notwendig, dass das Umformwerkzeug aus einem warmfesten Material besteht.

Gemäß einer bevorzugten Ausführungsform ist jeder Pressbacken mit einer eigenen Heizpatrone bestückt.

Die Vorrichtung umfasst auch eine Halterung für das Halten des Endabschnitts des Lichtleitfaserbündels.

Vorzugsweise ist die Halterung in axialer Richtung verschiebbar. Diese Verschiebbarkeit ist insbesondere dann von Vorteil, wenn der Verschleiß des Gegenringes und/oder der Außenflächen der Pressbacken soweit fortgeschritten ist, dass die axiale Verschiebung der Bauteile vergrößert werden muss. Auch Toleranzen der Hülsenabmessungen und Abmessungen der Lichtleitfaserbündelenden können durch einen größeren Verschiebungsweg zwischen Gegenring und Presswerkzeug kompensiert werden. Die verschiebbare und ggf. auch federnde Lagerung der Halterung des Lichtleitfaserbündelendes nimmt die axial wirkenden Kräfte auf, so dass eine Beschädigung der Lichtleitfasern wirksam vermieden wird.

Beispielhafte Ausführungen der Erfindungen werden nachfolgend anhand der Zeichnungen näher erläutert.

Es zeigen:
- Fig. 1: einen Schnitt durch die Vorrichtung zum Herstellen eines Abschlusses eines Lichtleitfaserbündels,
- Fig. 2: eine perspektivische Ansicht des Presswerkzeuges,
- Fig. 3: die Draufsicht auf die Stirnfläche des in Figur 2 gezeigten Presswerkzeuges gemäß einer weiteren Ausführungsform und
- Fig. 4: die Draufsicht auf einen Ausschnitt der Stirnfläche eines Lichtleitfaserbündels mit aufgepresster Hülse.

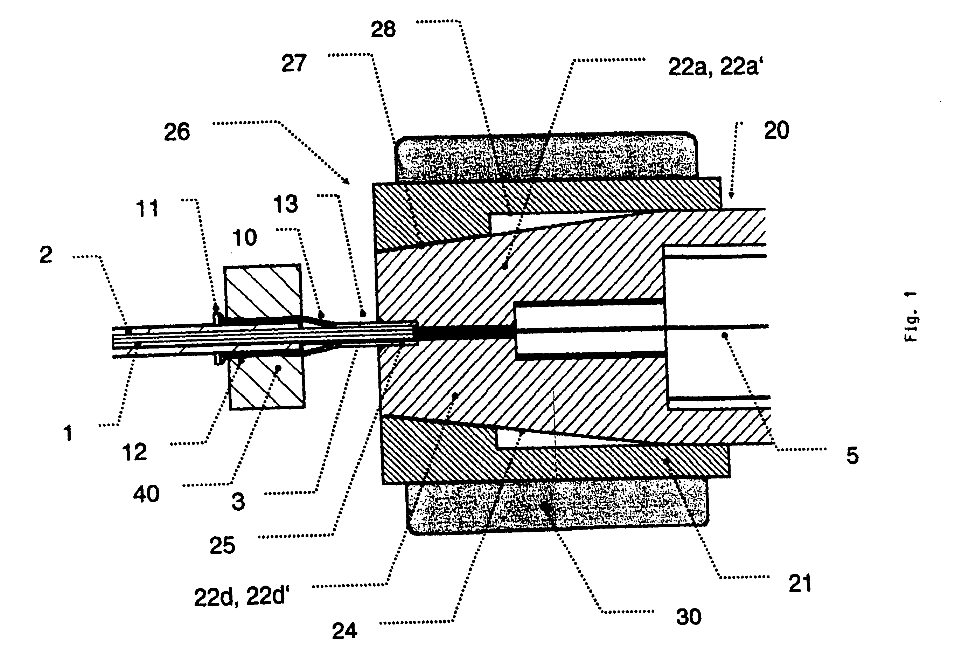

In der Figur 1 ist ein Schnitt durch eine Vorrichtung zum Herstellen eines Abschlusses eines Lichtleitfaserbündels dargestellt. Im linken Teil der Figur 1 ist ein Lichtleitfaserbündel 1 mit einem Schutzmantel 2 zu sehen, wobei der Endabschnitt 3 des Lichtleitfaserbündels vom Schutzmantel 2 befreit ist. Über diesen Endabschnitt 3 und den Endabschnitt des Schutzmantels 2 ist eine Hülse 10 geschoben, die einen durchmessergrößeren Abschnitt 12 und einen durchmesserkleineren Abschnitt 13 aufweist. Am rückwärtigen Ende des durchmessergrößeren Abschnitts 12 ist noch ein Bund 11 angeformt, der jedoch für das Herstellverfahren keine Bedeutung hat und auch fehlen kann. Die Hülse 10 wird im Bereich des durchmessergrößeren Abschnitts 12 von einer Halterung 40 gehalten, die in axialer Richtung, d.h. in Richtung der Längsachse 5 verschiebbar und federnd gelagert ist (nicht dargestellt).

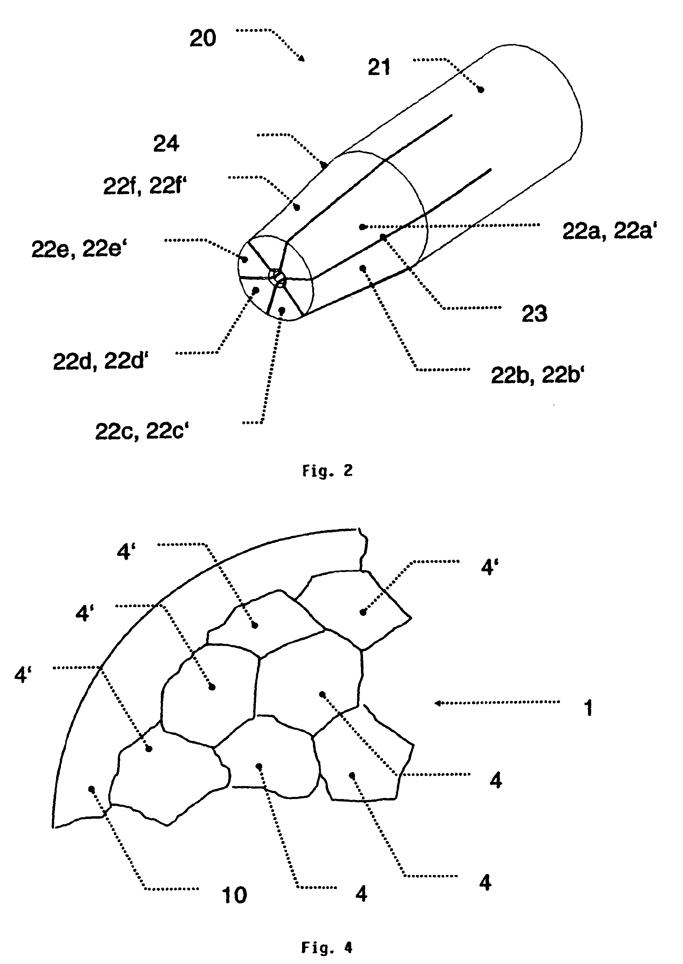

Der vordere zu verpressende Abschnitt 25 des durchmesserkleineren Abschnitts 13 der Hülse 10 ist in ein Umformwerkzeug 20 eingeführt, das einen rohrförmigen Körper 21 aufweist, der mehrere Pressbacken 22a-f besitzt, wie dies in der Figur 2 dargestellt ist.

Der Rohrkörper 21 ist - wie in Figur 2 dargestellt ist - mit insgesamt sechs über den Umfang verteilten Längsschlitzen 23 versehen, wodurch sechs Rohrsegmente oder Pressbacken 22a-f gebildet werden, die am freien Ende jeweils sich verjüngende Abschnitte 22a'-22f' aufweisen. Die Pressbacken 22a-f sind dadurch federnd am Rohrkörper 21 angeordnet und können sich in radialer Richtung bewegen. Die Gesamtheit aller Pressbacken 22a-f besitzt im Bereich der sich verjüngenden Abschnitte 22a'-2f' eine konische oder kegelstumpfförmige Außenkontur, wobei die konische Außenfläche 24 mit einem in Figur 1 dargestellten Gegenring 26 zusammenwirkt.

Der Gegenring 26 besitzt eine ebenfalls konische Innenfläche 27, die bei einer axialen Verschiebung von Gegenring 26 und Umformwegzeug 20 über die Außenfläche 24 der Pressbacken 22a-f gleitet. Die Kontaktflächen von Gegenring 26 und Pressbacken 22a-f können mit einer Gleitbeschichtung versehen sein.

Der Gegenring 26 besitzt noch einen zylindrischen Abschnitt mit einer zylindrischen Innenfläche 28, die die axiale Führung des Umformwerkzeuges 20 unterstützt. Durch die axiale Verschiebung von Gegenring 26 und/oder Umformwerkzeug 20 werden die Pressbacken in radialer Richtung (siehe Pfeile) bewegt, wodurch die Hülse 10 auf dem Lichtleitfaserbündelende 3 verpresst wird.

Die Vorrichtung ist in der hier gezeigten Ausführungsform der Figur 1 mit einem Heizmantel 30 versehen, der an der Außenseite des Gegenrings 26 anliegt.

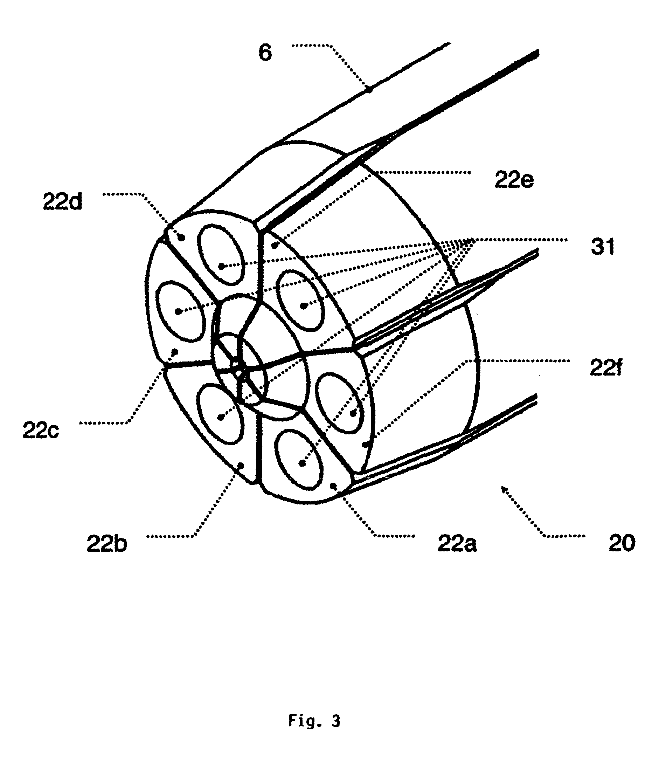

In der Figur 3 ist die Draufsicht auf die Stirnfläche eines Umformwerkzeugs 20 dargestellt. In dieser Ausführungsform ist jede Pressbacke 22a-f mit einer eigenen Heizpatrone 31 bestückt.

In der Figur 4 ist ein vergrößerter Ausschnitt einer Draufsicht auf das stirnseitige Ende eines Lichtleitfaserbündels 1 mit Hülse 10 dargestellt. Durch das Verpressen der Hülse 10 auf den Lichtleitfasern 4 erfolgt eine Verformung der Innenfläche der Hülse 10, so dass sich die außen liegenden Lichtleitfasern 4' in das Material der Hülse 10 eindrücken und teilweise im Material der Hülse 10 eingebettet sind. Dadurch wird eine stabile Verbindung zwischen den Lichtleitfasern 4' und dem Hülsenmaterial gewährleistet, wodurch die Abzugskräfte deutlich erhöht werden. Die Fasern 4, 4' werden bei diesem Pressvorgang etwas deformiert, wobei allerdings keine Verschmelzung der Lichtleitfasern 4 stattfindet, sondern allenfalls ein Anheften oder Ankleben.

### Bezugszeichenliste

- 1: Lichtleitfaserbündel
- 2: Schutzmantel
- 3: Endabschnitt
- 4: Lichtleitfaser
- 4': außenliegende Lichtleitfaser
- 5: Längsachse
- 10: Hülse
- 11: Bund
- 12: durchmessergrößerer Abschnitt
- 13: durchmesserkleinerer Abschnitt
- 20: Umformwerkzeug
- 21: rohrförmiger Körper
- 22a-f: Pressbacke
- 22a'-f': sich verjüngender Abschnitt
- 23: Längsschlitz
- 24: kegelstumpfförmige Außenfläche
- 25: verpressender Abschnitt
- 26: Gegenring
- 27: konische Innenfläche
- 28: zylindrische Innenfläche
- 30: Heizmantel
- 31: Heizpatrone
- 40: Halterung

## Patentansprüche

1. Verfahren zum Herstellen des Abschlusses eines Lichtleitfaserbündels (1), bei dem an dem Endabschnitt (3) des Lichtleitfaserbündels (1) eine Hülse (10) aufgeschoben wird und die Hülse (10) in einem Umformwerkzeug (20) mindestens unter Einwikung von Druck auf dem Endabschnitt (3) verpreßt wird, wobei der Endabschnitt (3) des Lichtleitfaserbündels (1) aus Glasfasern (4, 4') zusammen mit der aufgeschobenen Hülse ohne Druckeinwirkung auf die Hülse in ein Preßwerkzeug mit mehr als zwei Backen (22a-f) eingeführt und positioniert wird und nach der Positionierung mittels der Backen (22a-f) ein Druck in ausschließlich radialer Richtung auf die Hülse ausgeübt (10) wird, **dadurch gekennzeichnet, dass** die Backen (22a-f) jeweils mit einer Heizpatrone (31) bestückt sind und mittels dieser Heizpatronen (31) beim Verpressen der Hülse (10) beheizt werden, so dass die Glasfasern (4, 4') beim Verpressen deformiert werden.

2. Verfahren nach Anspruch 1, **dadurch gekennzeichnet, dass** beim Aufschieben der Hülse (10) die Lichtleitfasern (4, 4') des Endabschnitts (3) nicht gegeneinander verpresst werden.

3. Verfahren nach Anspruch 1 oder 2, **dadurch gekennzeichnet, dass** eine Hülse (10) aus Metall oder Glas verwendet wird.

4. Verfahren nach einem der Ansprüche 1 bis 3, **dadurch gekennzeichnet, dass** die Hülse (10) auf eine Temperatur von 500 °C bis 700 °C erwärmt wird.

5. Verfahren nach einem der Ansprüche 1 bis 4, **dadurch gekennzeichnet, dass** die Verpressung bis zur Ausbildung eines zwickelfreien Endes des Faserbündels erfolgt.

6. Lichtleitfaserbündel mit einer an einem Endabschnitt befestigten Hülse (10), wobei die Lichtleitfasern (4, 4') aus Glas bestehen und die außen liegenden Lichtleitfasern (4') des Lichtleitfaserbündels (1) mindestens teilweise in das Material der Hülse (10) eingebettet und die Lichtleitfasern (4, 4') deformiert sind, **dadurch gekennzeichnet, dass** die aneinander angrenzenden deformierten Lichtleitfasern (4, 4') jeweils in flächigem Kontakt aneinander anliegen und ein zwickelfreies Ende des Faserbündels bilden.

7. Lichtleitfaserbündel nach Anspruch 6, **dadurch gekennzeichnet, dass** die Hülse (10) aus Metall oder Glas besteht.

8. Lichtleitfaserbündel nach Anspruch 6 oder 7, **dadurch gekennzeichnet, dass** die Hülse (10) eine Wandstärke von 0,3 bis 0,4 mm aufweist.

9. Vorrichtung zum Herstellen eines Abschlusses eines Lichtleitfaserbündels (1) mittels einer Hülse (10),
mit einer Halterung (40) für das Halten eines Endabschnittes (3) des Lichtleitfaserbündels (1) und mit einem Umformwerkzeug (20), in dem die Hülse (10) gegen den Endabschnitt (3) des Lichtleitfaserbündels (1) verpressbar ist, wobei das Umformwerkzeug (20) mehr als zwei, die Hülse (10) weitgehend umschließende, in radialer Richtung bewegbare Pressbacken (22a-f) aufweist, **dadurch gekennzeichnet, dass** die Vorrichtung ferner eine Heizeinrichtung zum Beheizen der Pressbacken (22a-f) aufweist, wobei die Heizeinrichtung Heizpatronen (31) umfasst und wobei jede der Pressbacken (22a-f) des Umformwerkzeugs (20) mit einer Heizpatrone (31) bestückt ist.

10. Vorrichtung nach Anspruch 9, **dadurch gekennzeichnet, dass** die Hülse (10) aus Metall oder Glas besteht.

11. Vorrichtung nach Anspruch 9 oder 10, **dadurch gekennzeichnet, dass** ein Gegenring (26) vorgesehen ist, in den die Pressbacken (22a-f) eingreifen, wobei die Außenflächen der Pressbacken (22a-f) an der Innenfläche (27) des Gegenrings (26) anliegen und dass der Gegenring (26) und die Pressbacken (22a-f) relativ zueinander in axialer Richtung bewegbar sind.

12. Vorrichtung nach einem der Ansprüche 9 bis 11, **dadurch gekennzeichnet, dass** jede der Pressbacken (22a-f) einen sich zum freien Ende hin verjüngende Abschnitt (22a'-f) aufweist.

13. Vorrichtung nach einem der Ansprüche 9 bis 12, **dadurch gekennzeichnet, dass** die gesamte Außenfläche (24) aller Pressbackenabschnitte (22a'-f) kegelstumpfartig oder pyramidenstumpfartig ist.

14. Vorrichtung nach einem der Ansprüche 9 bis 13, **dadurch gekennzeichnet, dass** die Außenfläche (24) und/oder die Innenfläche (27) des Gegenrings mit einer Gleitbeschichtung versehen sind.

15. Vorrichtung nach einem der Ansprüche 9 bis 14, **dadurch gekennzeichnet, dass** die Pressbacken (22a-f) in radialer Richtung federnd gelagert sind.

16. Vorrichtung nach einem der Ansprüche 9 bis 15, **dadurch gekennzeichnet, dass** die Pressbacken (22a-f) gegen eine radial nach außen gerichtete Federkraft radial nach innen bewegbar sind.

17. Vorrichtung nach einem der Ansprüche 9 bis 16, **dadurch gekennzeichnet, dass** das Umformwerkzeug (20) einen rohrförmigen Körper (21) aufweist, der einen mit Längsschlitzen (23) versehenen Endabschnitt besitzt und
dass die durch die Längsschlitze (23) getrennten Rohrsegmente als Pressbacken (22a-f) ausgebildet sind.

18. Vorrichtung nach einem der Ansprüche 9 bis 17, **dadurch gekennzeichnet, dass** die Heizeinrichtung eine induktive Heizung, Heizbänder, Heizmäntel umfasst.

19. Vorrichtung nach einem der Ansprüche 9 bis 18, **dadurch gekennzeichnet, dass** die Halterung (40) in axialer Richtung verschiebbar ist.

## Claims

1. Method for production of the termination of an optical fibre bundle (1) in which a sleeve (10) is pushed onto the end section (3) of the optical fibre bundle (1) and the sleeve (10) is compressed in a shaping tool (20) at least under the influence of pressure on the end section (3), with the end section (3) of the optical fibre bundle (1) composed of glass fibres (4, 4') being inserted and positioned together with the pushed-on sleeve, and without any pressure influence on the sleeve, into a pressing tool with more than two jaws (22a-f) and, after positioning, with a pressure being exerted exclusively in the radial direction on the sleeve (10) by means of the jaws (22a-f), **characterized in that** the jaws (22a-f) are each fitted with a heating cartridge (31) and are heated by means of these heating cartridges (31) during the compression of the sleeve (10), such that the glass fibres (4, 4') are deformed during the compression.

2. Method according to Claim 1, **characterized in that** the optical fibres (4, 4') in the end section (3) are not compressed with respect to one another when the sleeve (10) is being pushed on.

3. Method according to Claim 1 or 2, **characterized in that** a sleeve (10) composed of metal or glass is used.

4. Method according to one of Claims 1 to 3,
**characterized in that** the sleeve (10) is heated to a temperature of 500°C to 700°C.

5. Method according to one of Claims 1 to 4,
**characterized in that** the compression is carried out until a gap-free end of the fibre bundle is formed.

6. Optical fibre bundle having a sleeve (10) which is attached to an end section, with the optical fibres (4, 4') being composed of glass and with the optical fibres (4, 4') which are located on the outside of the optical fibre bundle (1) being at least partially embedded in the material of the sleeve (10), and with the optical fibres (4, 4') being deformed**, characterized in that** the mutually adjacent deformed optical fibres (4, 4') each make a flat contact on one another, forming a gap-free end of the fibre bundle.

7. Optical fibre bundle according to Claim 6, **characterized in that** the sleeve (10) is composed of metal or glass.

8. Optical fibre bundle according to Claim 6 or 7, **characterized in that** the sleeve (10) has a wall thickness of 0.3 to 0.4 mm.

9. Apparatus for production of a termination of an optical fibre bundle (1) by means of a sleeve (10),
having a holder (40) for holding an end section (3) of the optical fibre bundle (1) and having a shaping tool (20), in which the sleeve (10) can be pressed against the end section (3) of the optical fibre bundle (1), with the shaping tool (20) having more than two pressing jaws (22a-f), which largely surround the sleeve (10) and can be moved in the radial direction, **characterized in that** the apparatus furthermore has a heating device for heating the pressing jaws (22a-f), with the heating device comprising heating cartridges (31), and with each of the pressing jaws (22a-f) of the shaping tool (20) being fitted with a heated cartridge (31).

10. Apparatus according to Claim 9, **characterized in that** the sleeve (10) is composed of metal or glass.

11. Apparatus according to Claim 9 or 10, **characterized in that** a mating ring (26) is provided, in which the pressing jaws (22a-f) engage, with the outer surface of the pressing jaws (22a-f) resting on the inner surface (27) of the mating ring (26), and **in that** the mating ring (26) and the pressing jaws (22a-f) can be moved relative to one another in the axial direction.

12. Apparatus according to one of Claims 9 to 11, **characterized in that** each of the pressing jaws (22a-f) has a section (22a'-f') which tapers towards the free end.

13. Apparatus according to one of Claims 9 to 12, **characterized in that** the entire outer surface (24) of all the pressing jaw sections (22a'-f') is in the form of a truncated cone or truncated pyramid.

14. Apparatus according to one of Claims 9 to 13, **characterized in that** the outer surface (24) and/or the inner surface (27) of the mating ring are/is provided with a sliding coating.

15. Apparatus according to one of Claims 9 to 14, **characterized in that** the pressing jaws (22a-f) are mounted such that they are sprung in the radial direction.

16. Apparatus according to one of Claims 9 to 15, **characterized in that** the pressing jaws (22a-f) can be moved radially inwards against a spring force which is directed radially outwards.

17. Apparatus according to one of Claims 9 to 16, **characterized in that** the shaping tool (20) has a tubular body (21) which has an end section provided with longitudinal slots (23) and
**in that** the tubular segments which are separated by the longitudinal slots (23) are in the form of pressing jaws (22a-f).

18. Apparatus according to one of Claims 9 to 17, **characterized in that** the heating device comprises inductive heating, heating strips and heating casings.

19. Apparatus according to one of Claims 9 to 18, **characterized in that** the holder (40) can be moved in the axial direction.

## Revendications

1. Procédé pour fabriquer la terminaison d'un faisceau de fibres optiques (1), dans lequel un manchon (10) est enfilé sur la partie d'extrémité (3) du faisceau de fibres optiques (1) et le manchon (10) est comprimé dans un outil de formage (20) au moins en exerçant de la pression sur la partie d'extrémité (3), la partie d'extrémité (3) du faisceau de fibres optiques (1) à base de fibres de verre (4, 4') étant introduite et positionnée en même temps que le manchon enfilé sans exercer de pression sur le manchon dans un outil de pressage avec plus de deux mâchoires (22a-f) et une pression étant exercée (10), après le positionnement au moyen des mâchoires (22a-f), dans une direction exclusivement radiale sur le manchon, **caractérisé en ce que** les mâchoires (22a-f) sont équipées chacune d'une cartouche chauffante (31) et sont chauffées au moyen de ces cartouches chauffantes (31) lors de la compression du manchon (10), de sorte que les fibres de verre (4, 4') sont déformées lors de la compression.

2. Procédé selon la revendication 1, **caractérisé en ce que,** lors de l'introduction du manchon (10), les fibres optiques (4, 4') de la partie d'extrémité (3) ne sont pas comprimées les unes contre les autres.

3. Procédé selon la revendication 1 ou 2, **caractérisé en ce qu'**un manchon (10) à base de métal ou de verre est utilisé.

4. Procédé selon l'une quelconque des revendications 1 à 3, **caractérisé en ce que** le manchon (10) est chauffé à une température de 500° à 700° C.

5. Procédé selon l'une quelconque des revendications 1 à 4, **caractérisé en ce que** la compression s'effectue jusqu'à la formation d'une extrémité sans gousset du faisceau de fibres.

6. Faisceau de fibres optiques comprenant un manchon (10) fixé sur une partie d'extrémité, les fibres optiques (4, 4') étant en verre et les fibres optiques (4') situées à l'extérieur du faisceau de fibres optiques (1) étant insérées au moins en partie dans le matériau du manchon (10) et les fibres optiques (4, 4') étant déformées, **caractérisé en ce que** les fibres optiques (4, 4') déformées et contiguës s'appuient les unes contre les autres par contact de surface et forment une extrémité sans gousset du faisceau de fibres.

7. Faisceau de fibres optiques selon la revendication 6, **caractérisé en ce que** le manchon (10) est en métal ou en verre.

8. Faisceau de fibres optiques selon la revendication 6 ou 7, **caractérisé en ce que** le manchon (10) présente une épaisseur de paroi de 0,3 à 0,4 mm.

9. Dispositif pour fabriquer une terminaison d'un faisceau de fibres optiques (1) au moyen d'un manchon (10), comprenant une fixation (40) pour le maintien d'une partie d'extrémité (3) du faisceau de fibres optiques (1) et un outil de formage (20) dans lequel le manchon (10) peut être pressé contre la partie d'extrémité (3) du faisceau de fibres optiques (1), l'outil de formage (20) présentant plus de deux mâchoires de pressage (22a-f) entourant largement le manchon (10) et pouvant être déplacées dans le sens radial, **caractérisé en ce que** le dispositif présente également un dispositif de chauffage pour le chauffage des mâchoires de pressage (22a-f), le dispositif de chauffage comportant des cartouches chauffantes (31) et chacune des mâchoires de pressage (22a-f) de l'outil de formage (20) étant équipée d'une cartouche chauffante (31).

10. Dispositif selon la revendication 9, **caractérisé en ce que** le manchon (10) est en métal ou en verre.

11. Dispositif selon la revendication 9 ou 10, **caractérisé en ce qu'**il est prévu une contre-bague (26) dans laquelle les mâchoires de pressage (22a-f) s'engagent, les surfaces extérieures des mâchoires de pressage (22a-f) s'appliquant sur la surface intérieure (27) de la contre-bague (26) et **en ce que** la contre-bague (26) et les mâchoires de pressage (22a-f) peuvent être déplacées les unes par rapport aux autres dans le sens radial.

12. Dispositif selon l'une quelconque des revendications 9 à 11, **caractérisé en ce que** chacune des mâchoires de pressage (22a-f) présente une partie (22a'-f') se rétrécissant en direction de l'extrémité libre.

13. Dispositif selon l'une quelconque des revendications 9 à 12, **caractérisé en ce que** la surface extérieure (24) globale de toutes les parties de mâchoires de pressage (22a'-f') est en forme de cône tronqué ou en forme de pyramide tronquée.

14. Dispositif selon l'une quelconque des revendications 9 à 13, **caractérisé en ce que** la surface extérieure (24) et/ou la surface intérieure (27) de la contre-bague est(sont) dotée(s) d'un revêtement de glissement.

15. Dispositif selon l'une quelconque des revendications 9 à 14, **caractérisé en ce que** les mâchoires de pressage (22a-f) sont fixées de façon élastique dans le sens radial.

16. Dispositif selon l'une quelconque des revendications 9 à 15, **caractérisé en ce que** les mâchoires de pressage (22a-f) peuvent être déplacées radialement vers l'intérieur contre une force de ressort dirigée radialement vers l'extérieur.

17. Dispositif selon l'une quelconque des revendications 9 à 16, **caractérisé en ce que** l'outil de formage (20) présente un corps (21) tubulaire qui présente une partie d'extrémité dotée de fentes longitudinales (23) et **en ce que** les segments de tube séparés par les fentes longitudinales (23) sont conçus comme des mâchoires de pressage (22a-f).

18. Dispositif selon l'une quelconque des revendications 9 à 17, **caractérisé en ce que** le dispositif de chauffage comporte un chauffage inductif, des rubans de chauffage, des chemises de chauffage.

19. Dispositif selon l'une quelconque des revendications 9 à 18, **caractérisé en ce que** la fixation (40) peut coulisser dans le sens axial.
